# EUROPEAN PATENT APPLICATION

(11) **EP 4 164 013 A1**
(43) Date of publication of application: **12.04.2023**
(21) Application number: 21214170.9
(22) Date of filing: 13.12.2021
(51) Int. Cl.: H01M 10/04, H01M 50/153, H01M 50/172

(54) **COVER ASSEMBLY AND BATTERY**

(30) Priority: 08.10.2021 CN 202111170221
(71) Applicant: Juheyuan Science & Technology Co., Ltd., Shenzhen, Quangdong 518116 (CN)
(72) Inventor: CHENG, Kewen, Shenzhen, 518031 (CN)
(74) Representative: Appleyard Lees IP LLP

(57) **Abstract**

A cover assembly and a battery are disclosed. The cover assembly is configured to cover a housing provided with an accommodating cavity in the battery and includes a top cover and an anode piece. The top cover is configured to be connected to the housing and cover the accommodating cavity, the top cover has a top surface away from the accommodating cavity, and the top surface is recessed towards the accommodating cavity to form a counterbore. The anode piece is disposed on the top cover, the counterbore is configured to accommodate the anode piece, the anode piece has an upper surface away from the accommodating cavity, and the upper surface is coplanar with the top surface; or the upper surface is closer to the accommodating cavity with respect to the top surface.

## Description

### TECHNICAL FIELD

The present disclosure relates to the technical field of battery technology, and in particular to a cover assembly and a battery having the cover assembly.

### BACKGROUND

Portable electronic devices and smart wearable devices have extremely wide applications in people's production and daily life. The aforementioned devices have a development trend of becoming more and more miniaturized. As a core component that provides energy for the normal operation of the aforementioned devices, the battery also requires a more miniaturized design, so there comes the small button battery. The button battery has the characteristics of high energy density, good storage performance, small self-discharge, and long service life. However, for the traditional button battery, when the battery capacity is to increase to enhance its own endurance, it usually leads to the increase of the thickness and the volume of the button battery; and when the thickness and the volume of the button battery are to be reduced, the capacity and endurance of the battery are usually reduced. Therefore, the traditional button battery cannot take into account its own large capacity and small volume at the same time.

### SUMMARY

According to some embodiments, a cover assembly and a battery including the cover assembly are provided, which take into account of a large capacity and a small volume of the battery at the same time.

A cover assembly is configured to cover a housing provided with an accommodating cavity of a battery, and the cover assembly includes:
a top cover, connected to the housing and covering the accommodating cavity, the top cover has a top surface away from the accommodating cavity, and the top surface is recessed towards the accommodating cavity to form a counterbore; and
an anode piece, provided on the top cover, the counterbore is configured to accommodate the anode piece, the anode piece has an upper surface away from the accommodating cavity, and the upper surface is coplanar with the top surface; or the upper surface is closer to the accommodating cavity with respect to the top surface.

In one of the embodiments, the top cover includes a substrate portion and a recessed portion, the top surface is located on the substrate portion , the recessed portion protrudes from the substrate portion, and the substrate portion and the recessed portion cooperatively enclose the counterbore.

In one of the embodiments, the top cover is provided with a through hole in communication with the counterbore and through which liquid is injected liquid into the accommodating cavity, the anode piece includes a bottom plate portion and a descending portion protruding from the bottom plate portion, the bottom plate portion is accommodated in the counterbore accommodates, and the descending portion is accommodated in the through hole.

In one of the embodiments, in a thickness direction of the cover assembly, the top cover has a first surface farthest from the top surface, the descending portion has a second surface farthest from the upper surface, and the first surface is coplanar with the second surface.

In one of the embodiments, the cover assembly further includes a sealing member connected to the anode piece, the upper surface of the anode piece is recessed to form a recessed hole, the anode piece has a bottom wall surface defining part of a boundary of the recessed hole, the bottom wall surface is provided with an penetration hole through which liquid is injected into the accommodating cavity, the sealing member is capable of sealing the penetration hole and has an outer surface away from the accommodating cavity, and the outer surface is coplanar with the upper surface; or the outer surface is closer to the accommodating cavity with respect to the upper surface.

In one of the embodiments, the sealing member has a base portion and a boss portion protruding from the base portion, the base portion is accommodated in the recessed hole, the boss portion is accommodated in the penetration hole, and the outer surface is located on the base portion.

In one of the embodiments, a gap is formed between the base portion and the anode piece in a direction perpendicular to a central axis of the housing.

In one of the embodiments, the anode piece is welded to the sealing member.

In one of the embodiments, a recessed depth of the counterbore is from 0.20 mm to 0.30 mm.

In one of the embodiments, the housing, the top cover and the anode piece are made of stainless steel.

In one of the embodiments, the top cover is welded to the housing.

A battery includes a housing and any one of the aforementioned cover assembly, the housing is provided with the accommodating cavity, the top cover is connected to the housing and covers the accommodating cavity.

Since the anode piece is accommodated in the counterbore and the upper surface is coplanar with the top surface, or the upper surface is closer to the accommodating cavity with respect to the top surface, that is, the upper surface is located below the top surface, the thickness of the anode piece does not increase the thickness of the cover assembly, such that the thickness of the cover assembly and the battery can be compressed, and the battery volume can be reduced to achieve miniaturization. At the same time, the influence of the aforementioned structure on the accommodating cavity is negligible, so as to ensure that the accommodating cavity has a large enough volume to ensure that the battery has a reasonable capacity and endurance, and finally ensure that the battery can take into account the two core parameters of large capacity and small volume at the same time, and the improvement of one parameter will not be at the expense of the other parameter.

### BRIEF DESCRIPTION OF THE DRAWINGS

FIG.1 is a perspective view of a battery according to an embodiment.
FIG. 2 is a perspective cross-sectional view of the battery shown in FIG. 1;
FIG. 3 is a plan cross-sectional view of the battery shown in FIG. 1;
FIG. 4 is an exploded view of the battery shown in FIG. 1;
FIG. 5 is a perspective partial cross-sectional view of FIG. 4;
FIG. 6 is a plan partial cross-sectional view of a cover assembly of the battery shown in FIG. 1 according to a first example;
FIG. 7 is a plan partial cross-sectional view of the cover assembly of the battery shown in FIG. 1 according to a second example;
FIG. 8 is a flowchart of a cover assembly processing method according to an embodiment.

### DETAILED DESCRIPTION OF THE EMBODIMENTS

In order to facilitate the understanding of the present disclosure, the present disclosure will be described more completely hereinafter with reference to the related accompanying drawings. Preferable embodiments of the present disclosure are presented in the accompanying drawings. However, the present disclosure may be embodied in many different forms and is not limited to the embodiments described herein. Rather, these embodiments are provided so that the understanding of the disclosure of the present disclosure will be more thorough and complete.

It should be understood that when an element is defined as "fixed to" another element, it is either directly on an element or indirectly on an element with a mediating element. When an element is considered to be "connected" to another element, it can be directly connected to another element or indirectly connected to another element with a mediating element. The terms "in", "out", "left", "right" and similar expressions used herein are for illustrative purposes only and are not meant to be the only implementation.

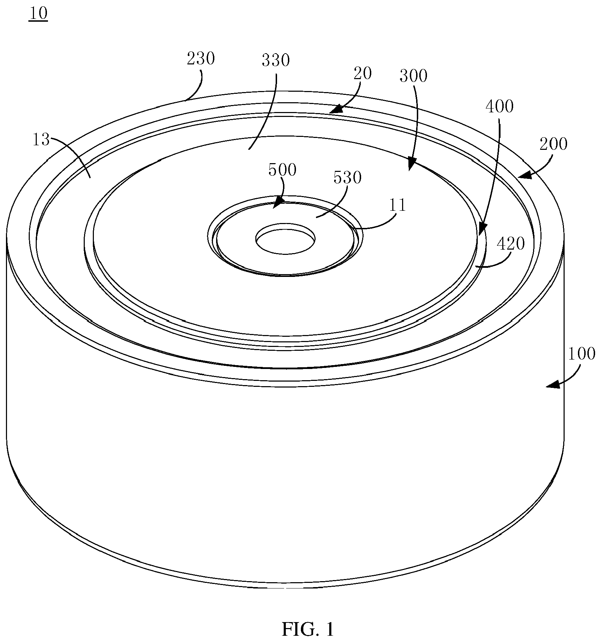

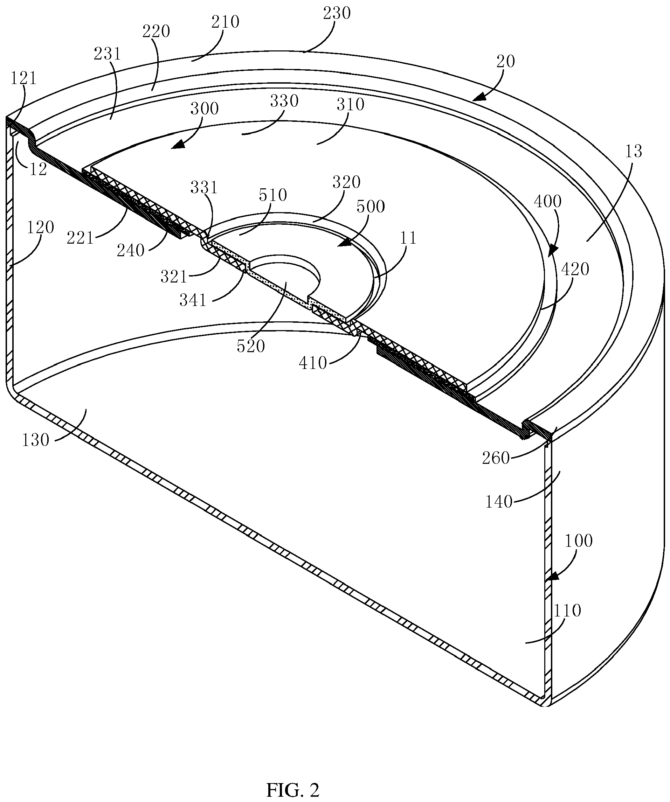

Referring to FIGS. 1, 2 and 3, a battery 10 provided by an embodiment includes a housing 100, a cover assembly 20, and a rolling core assembly (not shown). The cover assembly 20 includes a top cover 200, an anode piece 300, an insulating piece 400, and a sealing member 500.

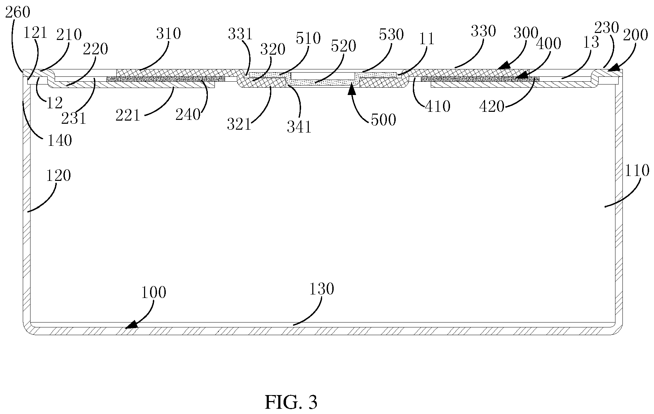

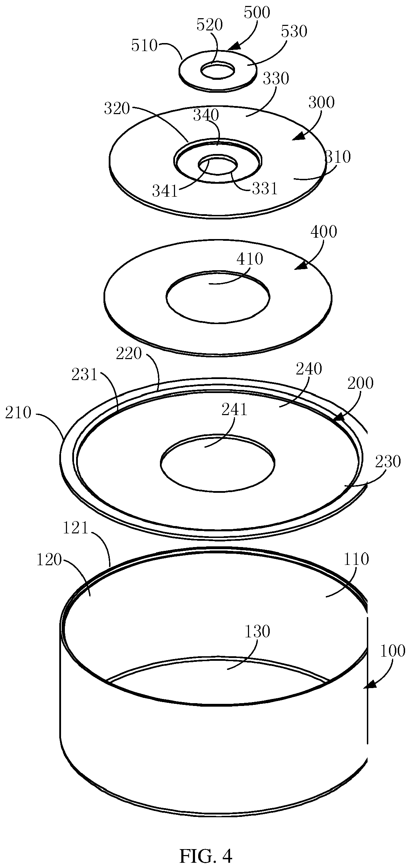

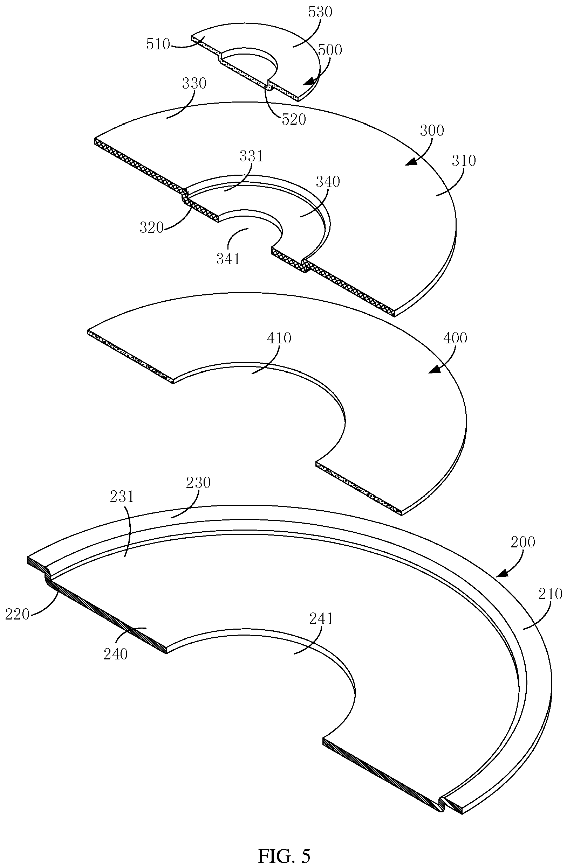

Referring to FIGS. 3, 4 and 5, in some embodiments, the housing 100 may be made of stainless steel. The housing 100 may have a cylinder-shaped structure. The housing 100 may enclose an accommodating cavity 110, which is a space having an opening. When the housing 100 is independently present, the accommodating cavity 110 is in direct communication with the outside through the opening. In other embodiments, the housing 100 may also have a shape of prismatic, such as a quadrangular or hexagonal prism, or the like. The housing 100 has an inner side peripheral surface 120 and an inner bottom surface 130. The inner bottom surface 130 may be a horizontally arranged circular surface, the inner side peripheral surface 120 may be a vertically arranged annular surface, and a lower end of the inner side peripheral surface 120 is connected to a periphery of the inner bottom surface 130, such that the inner side peripheral surface 120 is disposed around the inner bottom surface 130. The inner side peripheral surface 120 and the inner bottom surface 130 cooperatively define a boundary of the accommodating cavity 110. When the housing 100 has a shape of cylinder, an outer diameter of the housing 100 may be, for example, 12.2 mm.

The rolling core assembly is accommodated in the accommodating cavity 110, and an electrolyte is stored in the rolling core assembly. When the accommodating cavity 110 is larger, a volume of the rolling core assembly may be larger, such that an amount of power stored by the battery 10a is larger, thereby increasing the capacity of the entire battery 10a and the endurance of the battery 10a. To the contrary, when the accommodating cavity 110 is smaller, the volume of the rolling core assembly is smaller, such that the amount of power stored by the battery 10a is smaller, thereby decreasing the capacity of the entire battery 10a and the endurance of the battery 10a. In short, a volume size of the accommodating cavity 110 is proportional to the capacity and endurance of the battery 10. An anode tab strip and a cathode tab strip can be provided on the rolling core assembly. One end of the cathode tab strip is connected to the rolling core assembly, and the other end of the cathode tab strip is welded to the housing 100, such that it can be understood that the housing 100 can be understood as a cathode of the battery.

In some embodiments, a descending platform 121 is provided on the housing 100. Specifically, the descending platform 121 is formed by an upper end of the inner peripheral surface 120 adjacent the opening. Taking a central axis of the housing 100 as a reference, when the housing 100 has a shape of cylinder, a direction perpendicular to the central axis can be understood as a radial direction of the housing 100, and the upper end of the inner peripheral surface 120 is recessed along the radial direction of the housing 100 for a set depth to form the descending platform 121. By forming the descending platform 121, the volume of the accommodating cavity 110 can be reasonably increased on the basis of ensuring that the housing 100 has sufficient structural strength, such that the capacity and the endurance of the battery 10 can be increased to a certain extent.

Referring to FIGS. 3, 4 and 5, in some embodiments, the top cover 200 is substantially circular in shape and may be made of stainless steel. The top cover 200 is connected to the housing 100, that is, an edge of the top cover 200 is connected to an upper end of the housing 100, such that the top cover 200 can seal the opening of the accommodating cavity 110. The top cover 200 and the housing 100 can be directly connected by welding, such that a structure of the top cover 200 can be simplified, and a connection strength between the top cover 200 and the housing 100 can be increased. The top cover 200 has an outer side surface 260 located outside the accommodating cavity 110, and the housing 100 has an outer side peripheral surface 140 located outside the accommodating cavity 110, and the outer side surface 260 and the outer side peripheral surface 140 may be coplanar with each other.

The top cover 200 also has a top surface 230 away from the accommodating cavity 110. The central portion of the top surface 230 is formed with a counterbore 231 that is recessed towards the accommodating cavity 110 by a set depth. The counterbore 231 is configured to accommodate the anode piece 300. A recessed depth of the counterbore 231 may be about 0.25 mm, for example, it may be from 0.20 mm to 0.30 mm, and more specifically, it may be 0.20 mm, 0.22 mm, 0.25 mm, or 0.30 mm.

The structure of the top cover 200 can also be described in the following manner. The top cover 200 includes a substrate portion 210 and a recessed portion 220, and the substrate portion 210 surrounds an edge of the recessed portion 220. The top surface 230 is disposed on the substrate portion 210, and the recessed portion 220 is recessed downward towards the inner bottom surface 130 relative to the substrate portion 210. In short, the recessed portion 220 is recessed downward by a certain length relative to the substrate portion 210. Both the substrate portion 210 and the recessed portion 220 cooperatively enclose the aforementioned counterbore 231. An edge of the substrate portion 210 away from the recessed portion 220 is welded to the housing 100. The recessed portion 220 is accommodated in the accommodating cavity 110. Along the radial direction of the housing 100, a certain gap 12 is formed between the recessed portion 220 and the inner side peripheral surface 120. By providing the gap 12, the recessed portion 220 can occupy as little space of the accommodating cavity 110 as possible, thereby ensuring that the accommodating cavity 110 has a sufficient volume to improve the capacity and endurance of the battery 10. An outer diameter of the substrate portion 210 may be approximately equivalent to an outer diameter of the housing 100. A thickness of the substrate portion 210 may be about 0.15 mm. A dimension occupied by the entire top cover 200 in a thickness direction of the battery 10 may be about 0.4 mm, which can be understood as a sum of the thickness of the substrate portion 210 and a thickness of the recessed portion 220 is about 0.4 mm. An outer diameter of the recessed portion 220 may be approximately 91% of an outer diameter of the entire top cover 200.

Since the top cover 200 is recessed and formed with the counterbore 231, the top cover 200 may have a lower bottom surface 240. The lower bottom surface 240 is a horizontally arranged circular surface. The lower bottom surface 240 may be parallel to an inner bottom surface 130 of the housing 100 and define part of a boundary of the counterbore 231. The lower bottom surface 240 is located in the middle of the recessed portion 220. A middle portion of the lower bottom surface 240 is formed with a through hole 241 extending through the entire top cover 200, such that a lower end of the through hole 241 is in communication with the accommodating cavity 110 and an upper end of the through hole 241 is in communication with the counterbore 231. The through hole 241 is formed on the recessed portion 220. When the entire top cover 200 is welded to the housing 100, an electrolyte may be injected into the accommodating cavity 110 through the through hole 241, such that the electrolyte is stored in the rolling core assembly. The recessed portion 220 also has a first surface 221 disposed opposite to the orientation of the lower bottom surface 240, that is, the first surface 221 is arranged facing the accommodating cavity 110. The through hole 241 extends through the first surface 221, and the first surface 221 is farthest from the top surface 230 relative to the other surfaces of the top cover 200 in a thickness direction of the entire battery.

Referring to FIGS. 3, 4, and 5, in some embodiments, the insulating piece 400 may be made of a non-metallic insulator material, for example, the insulating piece 400 may be made of a polypropylene (PP) material. The insulating piece 400 is provided with a mounting hole 410 formed in the middle of the insulating piece 400, and the mounting hole 410 extends through the entire insulating piece 400 in a thickness direction of the insulating piece 400. Thus, the insulating piece 400 has a substantially annular structure. A diameter of the mounting hole 410 may be appropriately less than a diameter of the through hole 241 on the top cover 200. The insulating piece 400 is stacked between the anode piece 300 and the top cover 200, such that the insulating piece 400 is connected to the anode piece 300 and the top cover 200, for example, the insulating piece 400 may be connected to the top cover 200 by hot-melting, and the insulating piece 400 may be connected to the anode piece 300 by hot-melting. A thickness of the insulating piece 400 may be approximately from 0.05 mm to 0.15 mm, for example, a specific value of the thickness of the insulating piece 400 may be 0.05 mm, 0.09 mm, 0.1 mm, 0.15 mm, or the like. The insulating piece 400 is accommodated in the counterbore 231 of the top cover 200, and a thickness of the insulating piece 400 is less than the recessed depth of the counterbore 231, such that the upper surface of the insulating piece 400 is located below the top surface 230, thereby preventing the upper surface of the insulating piece 400 and the top surface 230 of the top cover 200 from being coplanar with each other. Since the insulating piece 400 is accommodated in the counterbore 231 of the top cover 200, the insulating piece 400 can make full use of the existing space of the counterbore 231, such that the insulating piece 400 does not need to occupy the mounting space outside the counterbore 231, and the arrangement of the insulating piece 400 does not increase an overall thickness dimension of the entire battery.

Referring to FIGS. 3, 4, and 5, in some embodiments, the anode piece 300 is substantially shaped as an annular and made of stainless steel. The anode piece 300 is disposed on the top cover 200 via the insulating piece 400. One end of the anode tab strip is connected to the rolling core assembly, and the other end of the anode tab strip is welded to the anode piece 300, such that the anode piece 300 can be understood as the anode of the battery 10. The anode piece 300 is partially accommodated in the counterbore 231. The anode piece 300 has an upper surface 330 away from the accommodating cavity 110, that is, the upper surface 330 is away from the inner bottom surface 130 of the housing 100. The upper surface 330 is recessed downward towards the accommodating cavity 110 to form a recessed hole 331. The upper surface 330 of the anode piece 300 may be parallel to the top surface 230 of the top cover 200. The upper surface 330 of the anode piece 300 may be spaced apart from the top surface 230 of the top cover 200 in a thickness direction of the battery, that is, the upper surface 330 is located below the top surface 230, such that the upper surface 330 is closer to the accommodating cavity 110 with respect to the top surface 230, that is, the upper surface 330 is closer to the lower bottom surface 240 with respect to the top surface 230, or it may be understood that the upper surface 330 does not protrude upward from the top surface 230. The anode piece 300 includes a bottom plate portion 310 and a descending portion 320. The bottom plate portion 310 and the descending portion 320 are connected to each other, that is, the bottom plate portion 310 is connected around an edge of the descending portion 320, and the descending portion 320 is provided protruding downward towards the inner bottom surface 130 relative to the bottom plate portion 310. In short, the descending portion 320 protrudes downward for a certain length relative to the bottom plate portion 310, and both the bottom plate portion 310 and the descending portion 320 cooperatively enclose the recessed hole 331.

Due to the presence of the recessed hole 331 in the anode piece 300, the anode piece 300 may have a bottom wall surface 340. The bottom wall surface 340 is a circular surface horizontally disposed, and the bottom wall surface 340 may be disposed parallel to the inner bottom surface 130 of the housing 100 and define part of the boundary of the recessed hole 331. The bottom wall surface 340 is located at the descending portion 320 and away from the accommodating cavity 110. An penetration hole 341 is formed in a middle portion of the bottom wall surface 340, which extends through the entire anode piece 300 in a thickness direction of the anode piece 300, such that the lower end of the penetration hole 341 is in communication with the accommodating cavity 110 through the through hole 241, and the upper end of the through hole 241 is in communication with the recessed hole 331. The penetration hole 341 is formed in the descending portion 320. When the anode piece 300 is fixed to the top cover 200 via the insulating piece 400, the electrolyte can be injected into the accommodating cavity 110 through the penetration hole 341. The descending portion 320 also has a second surface 321 facing the accommodating cavity 110, that is, the orientations of the second surface 321 and the bottom wall surface 340 are opposite. The penetration hole 341 extends through the second surface 321. The second surface 321 is farthest from the top surface 330 relative to the other surfaces of the anode piece 300 in a thickness direction of the entire battery. The anode tab strip on the rolling core assembly is welded to the second surface 321 via the through hole 241, then the first surface 221 and the second surface 321 may be coplanar with each other. In this way, an end of the first surface 221 is prevented from scratching the anode tab strip, and the insulating material on the anode tab strip is effectively prevented from being damaged. In other embodiments, the first surface 221 and the second surface 321 may be separated from each other by a smaller distance in a vertical direction, for example, the first surface 221 is further away from the top surface 230 with respect to the second surface 321.

The bottom plate portion 310 is connected to the insulating piece 400 by hot melting, and the bottom plate portion 310 is located in the counterbore 231 of the top cover 200. The upper surface 330 is located on the bottom plate portion 310, and the bottom plate portion 310 is stacked on the insulating piece 400. Since the upper surface 330 of the bottom plate portion 310 is located below the top surface 230 or just coplanar with the top surface 230, the bottom plate portion 310 can make full use of the existing space of the counterbore 231, such that the bottom plate portion 310 does not need to occupy the mounting space outside the counterbore 231, and the arrangement of the bottom plate portion 310 does not increase an overall thickness dimension of the entire battery. The descending portion 320 may be accommodated in the mounting hole 410 of the insulating piece 400 and the through hole 241 of the top cover 200. In this way, the descending portion 320 can make full use of the existing space of the mounting hole 410 and the through hole 241, so as to ensure that the descending portion 320 does not increase a total thickness dimension of the entire battery 10, thereby ensuring that the arrangement of the entire anode piece 300 does not increase the thickness dimension of the entire battery 10.

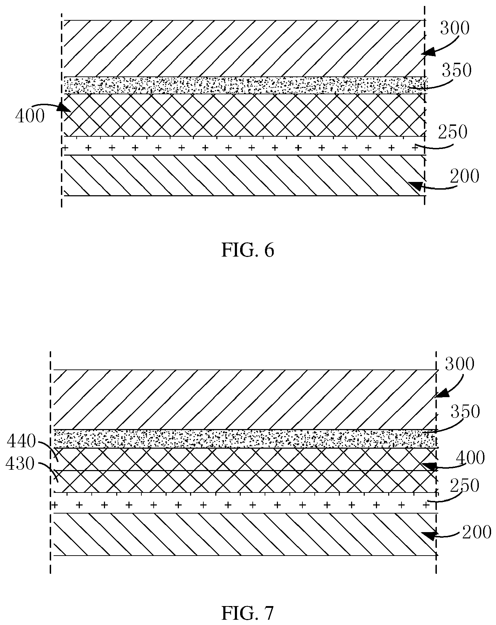

Referring to FIGS. 6 and 7, specifically, the top cover 200 includes a first connection layer 250 having a molecular structure different from other portions of the top cover 200. The anode piece 300 includes a second connection layer 350 having a molecular structure different from other portions of the anode piece 300. The insulating piece 400 is stacked between the first connection layer 250 and the second connection layer 350, and the insulating piece 400 is connected to the first connection layer 250 and the second connection layer 350 by hot-melting, such that the entire top cover 200 and the anode piece 300 are finally connected via the insulating piece 400 by hot-melting. During the hot-melt connection of the first connection layer 250 and the second connection layer 350 via the insulating piece 400, the insulating piece 400 may be divided into two parts of equal thickness, which may be denoted as a first insulating portion 430 and a second insulating portion 440, respectively. First, the first insulating portion 430 may be connected to the first connection layer 250 by a hot-melt process. Then, the second insulating portion 440 is connected to the second connection layer 350 by the hot-melt process, and finally, the first insulating portion and the second insulating portion 440 are connected to each other by hot-melting. In this way, an integral connection relationship between the entire insulating piece 400 and the anode piece 300, and between the entire insulating piece 400 and the top cover 200 can be realized. When the first insulating portion and the second insulating portion 440 are connected to each other by hot-melting, the first insulating portion and the second insulating portion 440 are fused to form an integral insulating piece 400.

In some embodiments, the insulating piece 400 may be formed as an inseparable entirety. For example, after the insulating piece 400 is connected to the first connection layer 250 by hot-melting, the insulating piece 400 is connected to the second connection layer 350 by hot-melting, such that the top cover 200 and the anode piece 300 are connected via the insulating piece 400 by hot-melting. For another example, after the insulating piece 400 is connected on the second connection layer 350 by hot-melting, the insulating piece 400 is connected on the first connection layer 250 by hot-melting, such that the top cover 200 and the anode piece 300 are connected via the insulating piece 400 by hot-melting.

In the hot-melt connection process, the insulating piece 400 is heated such that a part of the insulating piece 400 is melted into a viscous shape, and then the viscous part is attached to the top cover 200 or the anode piece 300. After the viscous part is solidified and formed, the insulating piece 400 is connected to the top cover 200 or the anode piece 300 by hot-melting.

The cross-sectional dimensions of both the insulating piece 400 and the anode piece 300 are less than the cross-sectional dimension of the top cover 200, such that the orthographic projection of both the insulating piece 400 and the anode piece 300 in a thickness direction of the top cover 200 is located within the recessed portion 220, such that edges of the base plate portion 310 and the insulating piece 400 may be spaced apart from the substrate portion 210 to form a gap 13 in the radial direction of the housing 100. This effectively prevents the edge of anode piece 300 from being in contact with the top cover 200 and causing a short circuit.

Due to the hot-melt connection between the insulating piece 400 and the top cover 200, and between the insulating piece 400 and the anode piece 300, on one hand, other additional connection layers between the insulating piece 400 and the top cover 200 are effectively avoided, and on the other hand, other additional connection layers between the insulating piece 400 and the anode piece 300 are avoided, thereby effectively simplifying the structure of the entire cover assembly 20 and reducing a total thickness thereof. On the other hand, the insulating piece 400 is stacked between the first connection layer 250 and the second connection layer 350 and connected to each other by hot-melting, such that a possible gap between the insulating piece 400 and the top cover 200, and between the insulating piece 400 and the anode piece 300 can be completely eliminated, thereby improving the sealing performance of the insulating piece 400 to the entire battery 10.

Since the housing 100 serves as the cathode of the battery 10a, and the top cover 200 is welded to the housing 100, both the top cover 200 and the housing 100 can serve as the cathode of the battery 10a, and the anode piece 300 serves as the anode of the battery 10a. By providing the insulating piece 400, on the one hand, the anode piece 300 and the top cover 200 can be insulated, and the short circuit phenomenon caused by the electrical conduction between the anode piece 300 and the top cover 200 can be prevented. The insulating piece 400 has an exposed portion 420, and when the insulating piece 400 is connected to the bottom plate portion 310, the exposed portion 420 surrounds the anode piece 300 and is located outside the coverage area of the anode piece 300. By providing the exposed portion 420, other conductors can be further prevented from connecting the anode piece 300 and the top cover 200, thus further enhancing the blocking and insulating effect of the insulating piece 400, and minimizing the short circuit phenomenon of the battery. On the other hand, the insulating piece 400 is stacked between the first connection layer 250 and the second connection layer 350 and connected to each other by hot-melting, such that the gap between the bottom plate portion 310 and the top cover 200 can be completely eliminated, and the electrolyte in the rolling core assembly can be prevented from flowing out of the accommodating cavity 110 through the gap between the bottom plate portion 310 and the top cover 200, that is, the electrolyte can be effectively prevented from leaking, that is, the insulating piece 400 can also play a good sealing role.

Referring to FIGS. 3, 4, and 5, in some embodiments, the sealing member 500 has a base portion 510 and a boss portion 520. The base portion 510 is connected around the edge of the boss portion 520, and the boss portion 520 protrudes downward towards the inner bottom surface 130 relative to the base portion 510. In short, the boss portion 520 protrudes downward for a certain length with respect to the base portion 510. The base portion 510 has an outer surface 530 away from the accommodating cavity 110, that is, the outer surface 530 faces away from the inner bottom surface 130. The outer surface 530 may be coplanar with the upper surface 330. Alternatively, the outer surface 530 is closer to the accommodating cavity 110 with respect to the upper surface 330, that is, the outer surface 530 is located below the upper surface 330. In the radial direction of the housing 100, that is, in a direction perpendicular to the central axis of the housing 100, a gap 11 is formed between an edge of the base portion 510 and the bottom plate portion 310 of the anode piece 300.

Since the base portion 510 is located in the recessed hole 331 and the outer surface 530 is located below the upper surface 330, the base portion 510 makes full use of the existing space of the recessed hole 331, such that the base portion 510 does not need to occupy the mounting space outside the recessed hole 331, and the arrangement of the base portion 510 does not increase the overall thickness dimension of the entire battery. Meanwhile, the boss portion 520 is accommodated in the penetration hole 341, such that the boss portion 520 makes full use of the existing space of the penetration hole 341, and ensures that the boss portion 520 does not increase the overall thickness dimension of the entire battery. This ensures that the arrangement of the entire sealing member 500 does not increase the thickness dimension of the entire battery.

The sealing member 500 may be made of stainless steel. The sealing member 500 is welded to the anode piece 300 and serves to block the penetration hole 341. After the electrolyte is injected into the accommodating cavity 110 from the penetration hole 341 through the through hole 241, the sealing member 500 may be welded to the anode piece 300, such that the boss portion 520 seals the penetration hole 341, and the electrolyte in the accommodating cavity 110 is prevented from leaking out of the accommodating cavity 110 through the penetration hole 341, that is, the electrolyte is effectively prevented from leaking.

If the anode piece 300, the insulating piece 400, and the top cover 200 are sequentially stacked in the thickness direction of the battery 10, a sum of the respective thicknesses of the anode piece 300, the insulating piece 400, and the top cover 200 will constitute part of the thickness of the battery 10, that is, the arrangement of any one of the anode piece 300, the insulating piece 400, and the top cover 200 will increase the thickness of the battery 10, thereby increasing the thickness of the battery 10, which is not conducive to reducing the volume of the battery 10 to achieve miniaturization.

In the aforementioned embodiment, by providing the counterbore 231 on the top cover 200, the insulating piece 400 and the anode piece 300 are accommodated in the counterbore 231, and the upper surface 330 is coplanar with the top surface 230, or the upper surface 330 is located below the top surface 230, such that the thicknesses of the insulating piece 400 and the anode piece 300 do not increase the thickness of the battery 10, thereby compressing the thickness of the battery 10 and reducing the volume of the battery 10 to achieve miniaturization. At the same time, the influence of the aforementioned structure arrangement on the volume of the accommodating cavity 110 is negligible, so as to ensure that the accommodating cavity 110 has a large enough volume to ensure that the battery 10 has a reasonable capacity and endurance, and finally ensure that the battery 10 can take into account the two core parameters of large capacity and small volume at the same time, and the improvement of one parameter will not be at the expense of the other parameter.

Further, if the insulating piece 400 is press-fitted into the top cover 200 and the anode piece 300 to form a detachable split connection manner, in order to improve the connection strength, the anode piece 300 must be formed into a "cap" structure to cover the entire top cover 200 and cover the housing 100, such that the thickness of the anode piece 300 constitutes part of the thickness of the battery, that is, the presence of the anode piece 300 will increase the thickness of the battery, and on the other hand, the surface area and the volume of the anode piece 300 will increase, resulting in an increase in the material cost, while increasing the volume of the battery.

In the aforementioned embodiment, the insulating piece 400 is integrally connected to the top cover 200 and the anode piece 300 by hot-melt connection, such that the anode piece 300 can be effectively prevented from covering the entire top cover 200, and an advantageous condition is created for providing the counterbore 231 on the top cover 200, so as to ensure that the anode piece 300 is accommodated in the counterbore 231 of the top cover 200. On the one hand, the presence of the anode piece 300 does not increase the thickness of the battery 200, on the other hand, the surface area and the volume of the insulating piece 400 and the anode piece 300 are reduced, and the material cost is reduced. Finally, the volume of the battery 10 is reduced and its manufacturing cost is reduced.

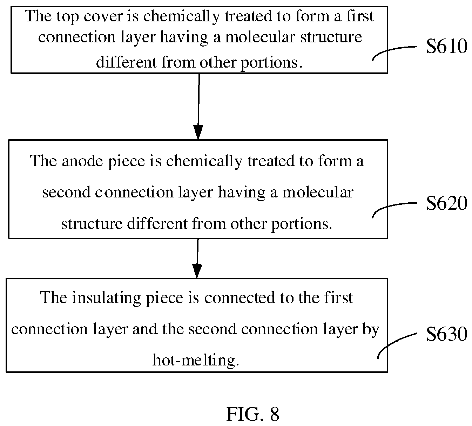

Referring to FIG. 8, according to an embodiment, a cover assembly processing method for processing the aforementioned cover assembly 20 is provided, the processing method mainly includes the following steps:
Step S610, the top cover 200 is chemically treated to form a first connection layer 250 having a molecular structure different from other portions.
Step S620, the anode piece 300 is chemically treated to form a second connection layer 350 having a molecular structure different from other portions.
Step S630, the insulating piece 400 is connected to the first connection layer 250 and the second connection layer 350 by hot-melting.

Referring to FIGS. 6, 7 and 8, specifically, the top cover 200 and the anode piece 300 are chemically treated by a chemical liquid including a passivation liquid having a certain acid such that a first connection layer 250 including a passivation layer is formed on the top cover 200 and a second connection layer 350 including a passivation layer is formed on the anode piece 300. Since both the first connection layer 250 and the second connection layer 350 include passivation layers, the first connection layer 250 has a relatively dense molecular structure relative to other portions of the top cover 200, and the second connection layer 350 also has a relatively dense molecular structure relative to other portions of the anode piece 300. After the aforementioned chemical treatment, the oil stain on the top cover 200 and the anode piece 300 can be removed, and the corrosion resistance of the first connection layer 250 and the second connection layer 350 can be improved, and the connection strength between the first connection layer 250 and the insulating piece 400, and the connection strength between the second connection layer 350 and the insulating piece 400 can be further improved. The first connection layer 250 is integrally connected to the other portions of the top cover 200, and the second connection layer 350 is integrally connected to the other portions of the anode piece 300. After heating the part of the insulating piece 400 connected to the first connection layer 250 to be viscous, the viscous part is solidified to form a hot-melt connection having a high connection strength with the first connection layer 250. After heating a part of the insulating piece connected to the second connection layer 350 to be viscous, the viscous part is solidified to form a hot-melt connection having a high connection strength with the second connection layer 350.

Referring to FIG. 6, in some embodiments, the insulating piece 400 is formed into an inseparable entirety. After the insulating piece 400 is connected to the first connection layer 250 by hot-melting, the insulating piece 400 is connected to the second connection layer 350 by hot-melting; or after the insulating piece 400 is connected to the second connection layer 350 by hot-melting, the insulating piece 400 is connected to the first connection layer 250 by hot-melting. Finally, the first connection layer 250 and the second connection layer 350 are connected via the insulating piece by hot-melting.

Referring to FIG. 7, in some embodiments, the insulating piece 400 is divided into a first insulating portion 430 and a second insulating portion 440 having equal thicknesses. The first insulating portion 430 is connected to the first connection layer 250 by hot-melting, the second insulating portion 440 is connected to the second connection layer 350 by hot-melting, and finally the first insulating portion 430 and the second insulating portion 440 are connected by hot-melting, such that the first connection layer 250 and the second connection layer 350 can be connected via the insulating piece by hot-melting.

In some embodiments, the roughness of the first connection layer 250 and the second connection layer 350 may be increased by sandblasting, which making, for example, the roughness of the connection part between the first connection layer 250 and the insulating piece 400, and the roughness of the connection part between the second connection layer 350 and the insulating piece 400 are maintained between 0.8µm and 6.3µm. In this way, the connection force between the insulating piece 400 and the first connection layer 250, and the connection force between the insulating piece 400 and second connection layer 350 can be effectively increased.

## Claims

1. A cover assembly (20) adapted for a battery (10a) whose housing (100) having an accommodating cavity (110), the cover assembly (20) comprising:
a top cover (200) connected to the housing (100) and covering the accommodating cavity (110), the top cover (200) having a top surface (230) away from the accommodating cavity (110), and the top surface (230) being recessed towards the accommodating cavity (110) to form a counterbore (231); and
an anode piece (300) provided on the top cover (200) and accommodated in the counterbore (231), the anode piece (300) having an upper surface (330) away from the accommodating cavity (110), and the upper surface (330) being coplanar with the top surface (230); or the upper surface (330) being closer to the accommodating cavity (110) with respect to the top surface (230).

2. The cover assembly (20) according to claim 1, wherein the top cover (200) comprises a substrate portion (210) and a recessed portion (220), the top surface (230) is located on the substrate portion (210), the recessed portion (220) protrudes from the substrate portion (210), and the substrate portion (210) and the recessed portion (220) cooperatively enclose the counterbore (231).

3. The cover assembly (20) according to claim 1, wherein the top cover (200) is provided with a through hole (241) in communication with the counterbore (231) and through which liquid is injected into the accommodating cavity (110), the anode piece (300) comprises a bottom plate portion (310) and a descending portion (320) protruding from the bottom plate portion (310), the bottom plate portion (310) is accommodated in the counterbore (231), and the descending portion (320) is accommodated in the through hole (241).

4. The cover assembly (20) according to claim 3, wherein in a thickness direction of the cover assembly (20), the top cover (200) has a first surface (221) farthest from the top surface (230), the descending portion (320) has a second surface (321) farthest from the upper surface (330), and the first surface (221) is coplanar with the second surface (321).

5. The cover assembly (20) according to claim 1, further comprising a sealing member (500) connected to the anode piece (300), wherein the upper surface (330) of the anode piece (300) is recessed to form a recessed hole (331), the anode piece (300) has a bottom wall surface (340) defining part of a boundary of the recessed hole (331), the bottom wall surface (340) is provided with a penetration hole (341) through which liquid is injected into the accommodating cavity (110), the sealing member(500) is capable of sealing the penetration hole (341) and has an outer surface (530) away from the accommodating cavity (110), and the outer surface (530) is coplanar with the upper surface (330); or the outer surface (530) is closer to the accommodating cavity (110) with respect to the upper surface (330).

6. The cover assembly (20) according to claim 5, wherein the sealing member(500) has a base portion (510) and a boss portion (520) protruding from the base portion (510), the base portion (510) is accommodated in the recessed hole (331), the boss portion (520) is accommodated in the penetration hole (341), and the outer surface (530) is located on the base portion (510).

7. The cover assembly (20) according to claim 6, wherein a gap is form between the base portion (510) and the anode piece (300) in a direction perpendicular to a central axis of the housing (100).

8. The cover assembly (20) according to claim 5, wherein the anode piece (300) is welded to the sealing member (500).

9. The cover assembly (20) according to claim 1, wherein a recessed depth of the counterbore (231) is from 0.20 mm to 0.30 mm.

10. The cover assembly (20) according to claim 1, wherein the housing (100), the top cover (200), and the anode piece (300) are made of stainless steel.

11. The cover assembly (20) according to claim 1, wherein the top cover (200) is welded to the housing (100).

12. A battery (10a), comprising a housing (100) and the cover assembly (20) according to any one of claims 1 to 11, wherein the housing (100) is provided with the accommodating cavity (110), the top cover (200) is connected to the housing (100) and covers the accommodating cavity (110).

## Amended claims

### Amended claims in accordance with Rule 137(2) EPC.

1. A cover assembly (20) adapted for a battery (10a) whose housing (100) having an accommodating cavity (110), the cover assembly (20) comprising:
a top cover (200) connected to the housing (100) and covering the accommodating cavity (110), the top cover (200) having a top surface (230) away from the accommodating cavity (110), and the top surface (230) being recessed towards the accommodating cavity (110) to form a counterbore (231); and
an anode piece (300) provided on the top cover (200) and accommodated in the counterbore (231), the anode piece (300) having an upper surface (330) away from the accommodating cavity (110), and the upper surface (330) being coplanar with the top surface (230); or the upper surface (330) being closer to the accommodating cavity (110) with respect to the top surface (230);
**characterized by** further comprising a sealing member (500) connected to the anode piece (300), wherein the upper surface (330) of the anode piece (300) is recessed to form a recessed hole (331), the anode piece (300) has a bottom wall surface (340) defining part of a boundary of the recessed hole (331), the bottom wall surface (340) is provided with a penetration hole (341) through which liquid is injected into the accommodating cavity (110), the sealing member (500) is capable of sealing the penetration hole (341) and has an outer surface (530) away from the accommodating cavity (110), and the outer surface (530) is coplanar with the upper surface (330); or the outer surface (530) is closer to the accommodating cavity (110) with respect to the upper surface (330);
wherein the sealing member (500) has a base portion (510) and a boss portion (520) protruding from the base portion (510), the base portion (510) is accommodated in the recessed hole (331), the boss portion (520) is accommodated in the penetration hole (341), and the outer surface (530) is located on the base portion (510).

2. The cover assembly (20) according to claim 1, wherein the top cover (200) comprises a substrate portion (210) and a recessed portion (220), the top surface (230) is located on the substrate portion (210), the recessed portion (220) protrudes from the substrate portion (210), and the substrate portion (210) and the recessed portion (220) cooperatively enclose the counterbore (231).

3. The cover assembly (20) according to claim 1, wherein the top cover (200) is provided with a through hole (241) in communication with the counterbore (231) for injecting liquid into the accommodating cavity (110), the anode piece (300) comprises a bottom plate portion (310) and a descending portion (320) protruding from the bottom plate portion (310), the bottom plate portion (310) is accommodated in the counterbore (231), and the descending portion (320) is accommodated in the through hole (241).

4. The cover assembly (20) according to claim 3, wherein in a thickness direction of the cover assembly (20), the top cover (200) has a first surface (221) farthest from the top surface (230), the descending portion (320) has a second surface (321) farthest from the upper surface (330), and the first surface (221) is coplanar with the second surface (321).

5. The cover assembly (20) according to claim 1, wherein a gap is form between the base portion (510) and the anode piece (300) in a direction perpendicular to a central axis of the housing (100).

6. The cover assembly (20) according to claim 1, wherein the anode piece (300) is welded to the sealing member (500).

7. The cover assembly (20) according to claim 1, wherein a recessed depth of the counterbore (231) is from 0.20 mm to 0.30 mm.

8. The cover assembly (20) according to claim 1, wherein the housing (100), the top cover (200), and the anode piece (300) are made of stainless steel.

9. The cover assembly (20) according to claim 1, wherein the top cover (200) is welded to the housing (100).

10. A battery (10a), comprising a housing (100) and the cover assembly (20) according to any one of claims 1 to 9, wherein the housing (100) is provided with the accommodating cavity (110), the top cover (200) is connected to the housing (100) and covers the accommodating cavity (110).
